# EUROPEAN PATENT SPECIFICATION

(11) **EP 1 470 976 B1**
(45) Date of publication and mention of the grant of the patent: **22.03.2006**
(21) Application number: 04000265.1
(22) Date of filing: 08.01.2004
(51) Int. Cl.: B60S 5/04

(54) **Gas filling device**
Luftfüllanlage
Dispositif de remplissage de gaz

(30) Priority: 22.04.2003 JP 2003117479
(43) Date of publication of application: 27.10.2004
(73) Proprietor: Pacific Industrial Co., Ltd., Ogaki-shi, Gifu-ken 503-8603 (JP)
(72) Inventor: Saheki, Setsuhiro, Ogaki-shi Gifu-ken 503 8603 (JP)
(74) Representative: Geyer, Fehners & Partner

(56) References cited:
- GB-A- 2 328 036
- US-A- 4 427 022
- US-A- 4 598 750
- US-A- 5 921 269

## Description

The present invention relates to a gas filling device for filing a vehicle tire with a predetermined gas. A gas filling device according to the preamble of claim 1 is disclosed in US 4 598 750.

For example, Japanese Laid-Open Patent Publication No. 8-169220 discloses an air filling device for filling vehicle tires with air. The air filling device has a pressure regulator for regulating air pressure, and an air chuck. The air chuck contacts a tire valve and adjusts the air pressure of a tire. After setting a target pressure value with the pressure regulator, the air chuck is brought into contact with the tire valve. Then, the air filling device adjusts the pressure of the tire. Specifically, the air filling device sends air from an air compressor to the tire. Also, the air filling device releases air in the tire through the air chuck. The air chuck is applied to any of the tires of a vehicle. The air filling device is therefore capable of adjusting the air pressure in the tires of any types of vehicles, for example, a four-wheeled passenger car, a multi-wheeled truck.

In a multi-wheeled truck, the air pressure of front wheels and the air pressure of rear wheels are adjusted to be different depending on the carried load. Even in this case, the pressure of all the tires must be adjusted with a single air chuck, while changing the target pressure of the pressure regulator. Specifically, the pressure of the front tires needs to be set, for example, to 800 [kPa] regardless of the carried load. On the other hand, the pressure of the rear tires needs to be set to 1000 [kPa] when the carried load is maximum, and to 800 [kPa] when there is no carried load. Therefore, adjustment of tire air pressure for a multi-wheeled vehicle is complicated and requires an extended period of time.

### SUMMARY OF THE INVENTION

Accordingly, it is an objective of the present invention to provide a gas filling device that is capable of quickly and easily adjusting the pressure of tires, according to claim 1.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a diagrammatic view showing an air filling device;
Fig. 2(a) is a cross-sectional view illustrating a distal portion (inner diameter r1, depth d1) of an air chuck;
Fig. 2(b) is a cross-sectional view illustrating a distal portion (inner diameter r2, depth d2) of an air chuck;
Fig. 3(a) is a cross-sectional view illustrating a threaded portion (outer diameter r1, depth d1) of a tire valve;
Fig. 3(b) is a cross-sectional view illustrating a threaded portion (outer diameter r2, depth d2) of a tire valve; and

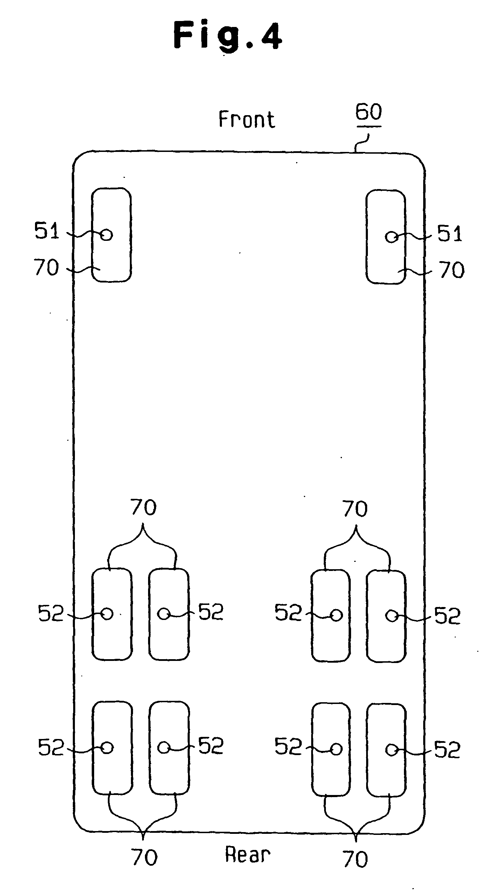

Fig. 4 is a diagrammatic view showing tires and tire valves installed in the tires.

### DETAILED DESCRIPTION OF THE PREFERRED EMBODIMENTS

A gas filling device according to one embodiment will now be described with reference to the drawings.

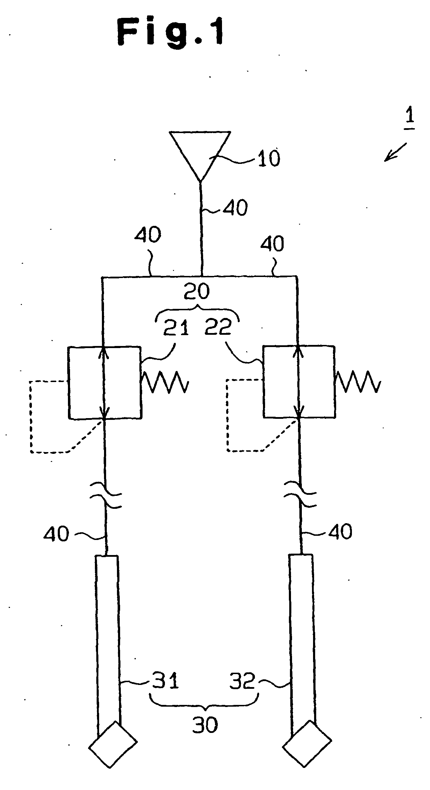

As shown in Fig. 1, the gas filling device, which is an air filling device 1, has an air supply source, which is an air compressor 10, first and second pressure regulators 21, 22, and first and second air chucks 31, 32. The pressure regulators 21, 22 each set a predetermined air pressure. Each air chuck 31, 32 contacts a tire valve and adjusts the pressure of the tire. The air chucks 31, 32 function as a gas chuck. The air compressor 10 and the pressure regulators 21, 22 are connected to each other with flexible rubber hoses 40. Also, the pressure regulators 21, 22 and the air chucks 31, 32 are connected to each other with tube bodies, which are flexible rubber hoses 40.

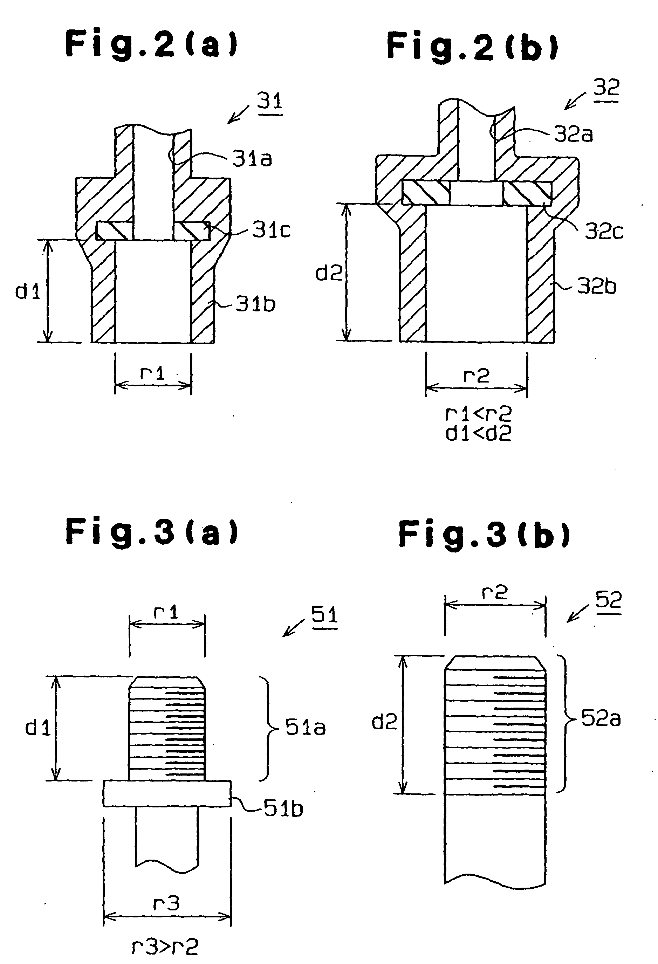

The structure of the air chucks 31, 32 will now be described with reference to Figs. 2(a) and 2(b).

As shown in Fig. 2(a), a passage 31a is formed in the first air chuck 31. A deflator (not shown) is provided in the passage 31a. The deflector presses a valve core incorporated in the tire valve. A fitting portion, which is a distal portion 31b, is formed at the distal end of the first air chuck 31. The distal portion 31b communicates with the passage 31a. The distal portion 31b is cylindrical and has an inner diameter of r1, and a depth d1. At the bottom of the distal portion 31b, or at the boundary between the passage 31a and the distal portion 31b, a sealing member, which is an annular rubber 31c, is provided.

As shown in Fig. 2(b), a passage 32a is formed in the second air chuck 32. A deflator (not shown) is provided in the passage 32a. The deflector presses a valve core incorporated in the tire valve. A fitting portion, which is a distal portion 32b, is formed at the distal end of the second air chuck 32. The distal portion 32b communicates with the passage 32a. The distal portion 32b is cylindrical and has an inner diameter of r2, and a depth d2. The inner diameter r2 of the second air chuck 32 is greater than the inner diameter r1 of the first air chuck 31. The depth d2 of the second air chuck 32 is longer than the depth d1 of the first air chuck 31. At the bottom of the distal portion 32b, or at the boundary between the passage 32a and the distal portion 32b, a sealing member, which is an annular rubber 32c, is provided.

The structure of the tire valves 51, 52 will now be described with reference to Fig. 3.

As shown in Fig. 3(a), a threaded portion 51a is formed at a distal end of the tire valve 51. A valve cap (not shown) is engaged with the threaded portion 51a. The threaded portion 51a has an outer diameter of r1, and a length of d1. A contact plate 51b is located below the threaded portion 51a. The contact plate 51b has an outer diameter of r3. The outer diameter r3 of the contact plate 51b is greater than the inner diameter r2 of the second air chuck 32.

As shown in Fig. 3(b), a threaded portion 52a is formed at a distal end of the tire valve 52. A valve cap (not shown) is engaged with the threaded portion 52a. The threaded portion 52a has an outer diameter of r2, and a length of d2.

The relationship between the air chucks 31, 32 and the tire valves 51, 52 will now be described with reference to Figs. 2(a) to 3(b).

The inner diameter r1 of the distal portion 31b of the first air chuck 31 shown in Fig. 2(a) is the same as the outer diameter r1 of the threaded portion 51a of the tire valve 51 shown in Fig. 3(a). The depth d1 of the distal portion 31b of the first air chuck 31 shown in Fig. 2(a) is the same as the depth d1 of the threaded portion 51a of the tire valve 51 shown in Fig. 3(a).

The cavity of the distal portion 31b of the first air chuck 31, or a cylindrical receiving portion, receives the threaded portion 51a.

Thus, when the distal portion 31b of the first air chuck 31 is fitted in the threaded portion 51a of the tire valve 51, the distal end of the threaded portion 51a contacts the annular rubber 31c. This permits the air chuck 31 to hermetically contact the tire valve 51. At this time, the deflator (not shown) provided in the passage 31a presses a valve core (not shown) incorporated in the tire valve 51. Therefore, the pressure of the tire having the tire valve 51 is adjusted based on the pressure of the tire and the reference pressure of the second pressure regulator 21. Thus, the pressure of the tire having the tire valve 51 is adjusted to the set pressure of the second pressure regulator 21.

The inner diameter r2 of the distal portion 32b of the second air chuck 32 shown in Fig. 2(b) is the same as the outer diameter r2 of the threaded portion 52a of the tire valve 52 shown in Fig. 3(b). The depth d2 of the distal portion 32b of the second air chuck 32 shown in Fig. 2(b) is the same as the depth d2 of the threaded portion 52a of the tire valve 52 shown in Fig. 3(b).

The cavity of the distal portion 32b of the second air chuck 32, or a cylindrical receiving portion, receives the threaded portion 52a.

Thus, when the distal portion 32b of the second air chuck 32 is fitted in the threaded portion 52a of the tire valve 52, the distal end of the threaded portion 52a contacts the annular rubber 32c. Therefore, the hermeticity between the second air chuck 32 and the tire valve 52 is guaranteed. At this time, the deflator (not shown) provided in the passage 32a presses a valve core (not shown) incorporated in the tire valve 52. Therefore, the pressure of the tire having the tire valve 52 is adjusted based on the pressure of the tire and the reference pressure of the second pressure regulator 22. Thus, the pressure of the tire having the tire valve 52 is adjusted to the reference pressure of the second pressure regulator 22.

Suppose a user attempts to adjust the pressure of a tire having the tire valve 52 shown in Fig. 3(b) using the first air chuck 31 shown in Fig. 2(a). However, the inner diameter r1 of the distal portion 31b of the first air chuck 31 is less than the outer diameter r2 of the threaded portion 52a of the tire valve 52. Therefore, the distal portion 31b of the first air chuck 31 cannot be fitted in the threaded portion 52a of the tire valve 52. Therefore, the first air chuck 31 cannot be used for supplying air to a tire having the tire valve 52.

Suppose a user attempts to adjust the pressure of a tire having the tire valve 51 shown in Fig. 3(a) using the second air chuck 32 shown in Fig. 2(b). However, the depth d2 the distal portion 32b of the second air chuck 32 is longer than the length d1 of the threaded portion 51a of the tire valve 51. In addition, the inner diameter of the distal portion 32b of the second air chuck 32 is less than the outer diameter r3 of the contact plate 51b of the tire valve 51.

Thus, when the second air chuck 32 is fitted in the tire valve 51, the distal portion 32b of the second air chuck 32 contacts the contact plate 51b. As a result, even if the second air chuck 32 is fitted in the tire valve 51, the distal end of the threaded portion 51a does not contact the rubber 32c of the second air chuck 32. Therefore, the second air chuck 32 cannot be used for supplying air to a tire having the tire valve 51.

The first air chuck 31 permits air to be supplied to a tire that has the threaded portion 51a of the tire valve 51.

On the other hand, the second air chuck 32 permits air to be supplied to a tire that has the threaded portion 51a of the tire valve 52. Therefore, the air chucks 31, 32 can be used for adjusting the pressure of a tire having the tire valve 51 and a tire having the tire valves 51, 52.

The operation of the air filling device 1 will now be described.

A case where the present invention is applied to a vehicle 60 (multi-wheeled) will be discussed below. The vehicle 60 has two front tires 70, and eight rear tires 70. Each front tire 70 of the vehicle 60 has the tire valve 51. Each rear tire 70 of the vehicle 60 has the tire valve 52. Regardless of the carried load, the front tires 70 set a pressure of 800 [kPa]. On the other hand, the pressure of each rear tire 70 is set to 1000 [kPa] when the carried load is maximum, and to 800 [kPa] when there is no carried load.

Adjustment of the pressure of the tires 70 using the air filling device 1 is performed in the following manner. First, the reference pressure of the first pressure regulator 21 for adjusting the pressure of the front tires 70 is set to 800 [kPa]. Then, if the carried load is maximum, the reference pressure of the second pressure regulator 22 for adjusting the pressure of the rear tires 70 is set to 1000 [kPa]. If there is no carried load, the reference pressure of the second pressure regulator 22 for adjusting the pressure of the rear tires 70 is set to 800 [kPa]. Then, the pressure of the front tires 70 is adjusted using the first air chuck 31, and the pressure of the rear tires 70 is adjusted using the second air chuck 32.

This embodiment has the following advantages.

As shown in Figs. 3(a) and 3(b), the shape of the tire valve 51, which is used for the front tires 70, is different from the shape of the tire valve 52, which is used for the rear tires 70. Therefore, if the settings of the pressure regulators 21, 22 are accurately done, adjustment of the front tires 70 and the rear tires 70 is not erroneously performed. Accordingly, the front tires 70 and the rear tires 70 maintain proper levels of air pressure. As a result, the rolling resistance of the tires 70 is reduced. This improves the fuel economy of the vehicle 60.

Further, the pressure of the front tires 70 and the pressure of the rear tires 70 can be simultaneously adjusted using the air chucks 31, 32. This shortens the time required for adjusting the pressure.

(2) The distal portion 31b of the first air chuck 31 is fitted in the threaded portion 51a of the tire valve 51. The distal portion 32b of the second air chuck 32 is fitted in the threaded portion 52a of the tire valve 52. However, the distal portion 31b of the first air chuck 31 cannot be fitted in the threaded portion 52a of the tire valve 52. The distal portion 32b of the second air chuck 32 cannot be fitted in the threaded portion 51a of the tire valve 51. In other words, the distal portion 31b, 32b of the first and second air chucks 31, 32 conform to the shape of the first and tire valves 51, 52, respectively. Therefore, if the settings of the pressure regulators 21, 22 are accurately done, adjustment of the front tires 70 having the tire valves 51 and the rear tires 70 having the tire valves 52 is not erroneously performed. Accordingly, the front tires 70 and the rear tires 70 maintain proper levels of air pressure. As a result, the rolling resistance of the tires 70 is reduced. This improves the fuel economy of the vehicle 60.

It should be apparent to those skilled in the art that the present invention may be embodied in many other specific forms without departing from the spirit or scope of the invention. Particularly, it should be understood that the invention may be embodied in the following forms.

Gas filling the tires 70 need not be air, which contains 78% of nitrogen. For example, nitrogen gas (100% of nitrogen) may be used.

The number of the pressure regulators 21, 22 need not be two, but may be three or more.

The shapes of the distal portion 31b, 32b of the air chucks 31, 32 are not limited to those shown in Figs. 2(a) and 2(b). The shapes of the distal portions 31b, 32b of the air chucks 31, 32 may be changed as long as the shapes conform to the shapes of fitted portions of the tire valves 51, 52.

The air filling device 1 of the illustrated embodiment may be used for simultaneously filling air to tires 70 of two or more vehicles (for example, a passenger car and a truck).

Although the inner diameter r1 of the first air chuck 31 and the outer diameter r1 of the tire valve 51 are referred to as the same, the description does not imply that the inner diameter r1 and the outer diameter r1 are exactly the same. That is, the description that the inner diameter r1 and the outer diameter r1 are the same includes a case that the inner diameter r1 and the outer diameter r1 are different such that a slight space is created between the distal portion 31b and the threaded portion 51a to allow the insertion of the threaded portion 51a into the distal portion 31b.

Therefore, the present examples and embodiments are to be considered as illustrative and not restrictive and the invention is not to be limited to the details given herein, but may be modified within the scope and equivalence of the appended claims.

## Claims

1. A gas filling device (1) for filling a plurality of tires with gas, the gas filling device comprising:
a single gas supply source (10);
a plurality of tube bodies (40) extending from the gas supply source (10) and permitting gas to pass through, and
a plurality of gas chucks (31, 32), each of which is provided at a distal end of one of the tube bodies (40) and is connectable to one of the tires, the plurality of gas chucks (31, 32) permitting gas to be simultaneously supplied to the connected tires, ***characterized by***
a plurality of pressure regulators (21, 22) each of which is located in one of the tube bodies (40) wherein each pressure regulator (21, 22) sets the pressure of gas supplied from the gas supply source (10) to a predetermined target pressure, the plurality of pressure regulators (21, 22) being capable of setting different target pressures, wherein each gas chuck (31, 32) permits gas to be supplied to the connected tire so that the pressure of the tire becomes the target pressure set by the corresponding pressure regulator (21, 22).

2. The gas filling device according to claim 1, **characterized in that** each gas chuck (31, 32) has a fitting portion (31b, 32b) that is fitted to a tire valve (51, 52) located on the corresponding tire.

3. The gas filling device according to claim 2, **characterized in that** the fitting portions (31b, 32b) of at least two of the gas chucks (31, 32) have different forms or sizes such that the fitting portions (31b, 32b) can be fitted to different kinds of tire valves (51, 52).

4. The gas filling device according to claim 2, **characterized in that** the fitting portion (31b, 32b) of each gas chuck (31, 32) has a cylindrical receiving portion to receive a tire valve (51, 52).

5. The gas filling device according to claim 4, **characterized in that** the cylindrical receiving portions of the fitting portions (31b, 32b) of at least two gas chucks (31, 32) have different inner diameters or depths such that the cylindrical receiving portions can be fitted to different kinds of tire valves (51, 52).

6. The gas filling device according to claim 4, **characterized in that** a sealing member (31c, 32c) is located in the cylindrical receiving portion of each gas chuck (31, 32), wherein, when the fitting portion (31b, 32b) is fitted to a tire valve (51, 52), the sealing member (31c, 32c) seals between the tire valve (51, 52) and the fitting portion (31b, 32b).

## Patentansprüche

1. Gasfüllvorrichtung (1) zum Füllen einer Mehrzahl von Reifen mit Gas, wobei die Gasfüllvorrichtung umfaßt:
eine einzelne Gaszuführquelle (10),
eine Mehrzahl von Rohrteilen (40), die sich von der Gaszuführquelle (10) aus erstrecken und Gas durchströmen lassen, und
eine Mehrzahl von Gasspannhülsen (31, 32), von denen jede an einem distalen Ende eines der Rohrteile (40) vorgesehen und an einen der Reifen anschließbar ist, wobei die Mehrzahl von Gasspannhülsen (31, 32) eine gleichzeitige Gaszufuhr an die angeschlossenen Reifen ermöglichen, **gekennzeichnet durch**
eine Mehrzahl von Druckreglern (21, 22), von denen jeder in einem der Rohrteile (40) angeordnet ist, wobei jeder Druckregler (21, 22) den Druck von Gas, das von der Gaszuführquelle (10) zugeführt wird, auf einen vorbestimmten Zieldruck einstellt, und die mehreren Druckregulatoren (21, 22) in der Lage sind, unterschiedliche Zieldrücke einzustellen, wobei jede Gasspannhülse (31, 32) es ermöglicht, dem daran angeschlossenen Reifen Gas so zuzuführen, daß der Druck des Reifens den Zieldruck erreicht, der von dem entsprechenden Druckregler (21, 22) eingestellt ist.

2. Gasfüllvorrichtung nach Anspruch 1, **dadurch gekennzeichnet, daß** jede Gasspannhülse (31, 32) einen Aufsatzabschnitt (31 b, 32b) aufweist, der auf ein Reifenventil (51, 52) aufgesetzt wird, das am entsprechenden Reifen angeordnet ist.

3. Gasfüllvorrichtung nach Anspruch 2, **dadurch gekennzeichnet, daß** die Aufsatzabschnitte (31b, 32b) mindestens zweier der Gasspannhülsen (31, 32) unterschiedliche Formen oder Größen aufweisen, so daß die Aufsatzabschnitte (31b, 32b) auf unterschiedliche Arten von Reifenventilen (51, 52) aufgesetzt werden können.

4. Gasfüllvorrichtung nach Anspruch 2, **dadurch gekennzeichnet, daß** der Aufsatzabschnitt (31b, 32b) jeder Gashülse (31, 32) einen zylindrischen Aufnahmeabschnitt zur Aufnahme eines Reifenventils (51, 52) aufweist.

5. Gasfüllvorrichtung nach Anspruch 4, **dadurch gekennzeichnet, daß** die zylindrischen Aufnahmeabschnitte der Aufsatzabschnitte (31b, 32b) mindestens zweier Gashülsen (31, 32) unterschiedliche Innendurchmesser oder Tiefen aufweisen, so daß die zylindrischen Aufnahmeabschnitte auf unterschiedliche Arten von Reifenventilen (51, 52) aufgesetzt werden können.

6. Gasfüllvorrichtung nach Anspruch 4, **dadurch gekennzeichnet, daß** ein Dichtelement (31c, 32c) im zylindrischen Aufnahmeabschnitt jeder Gashülse (31, 32) angeordnet ist, wobei das Dichtelement (31c, 32c), wenn der Aufsatzabschnitt (31b, 32b) auf ein Reifenventil (51, 52) aufgesetzt ist, eine Abdichtung zwischen dem Reifenventil (51, 52) und dem Aufsatzabschnitt (31b, 32b) bewirkt.

## Revendications

1. Dispositif de remplissage de gaz (1) destiné à remplir une pluralité de pneumatiques avec du gaz, le dispositif de remplissage de gaz comprenant :
une unique source d'alimentation en gaz (10) ;
une pluralité de corps tubulaires (40) s'étendant depuis la source d'alimentation en gaz (10) et permettant au gaz de passer à travers, et
une pluralité de raccords de gonflage au gaz (31, 32), chacun étant prévu au niveau d'une extrémité distale d'un des corps tubulaires (40) et étant raccordable à un des pneumatiques, la pluralité des raccords de gonflage au gaz (31, 32) permettant au gaz d'être délivré simultanément aux pneumatiques raccordés, **caractérisé en ce qu'**il comprend :
une pluralité de régulateurs de pression (21, 22) étant chacun situé dans un des corps tubulaires (40) où chaque régulateur de pression (21, 22) règle la pression du gaz délivré par la source d'alimentation en gaz (10) sur une pression cible prédéterminée, la pluralité des régulateurs de pression (21, 22) étant capables de régler différentes pressions cibles, où chaque raccord de gonflage au gaz (31, 32) permet au gaz d'être délivré au pneumatique raccordé de sorte que la pression du pneumatique devient la pression cible réglée par le régulateur de pression correspondant (21, 22).

2. Dispositif de remplissage de gaz selon la revendication 1, **caractérisé en ce que** chaque raccord de gonflage au gaz (31, 32) a une partie d'évacuation (31b, 32b) qui est adaptée sur une valve (51, 52) de pneumatique située sur le pneumatique correspondant.

3. Dispositif de remplissage de gaz selon la revendication 2, **caractérisé en ce que** les parties d'adaptation (31b, 32b) d'au moins deux des raccords de gonflage au gaz (31, 32) ont des formes ou des tailles différentes de telle sorte que les parties d'adaptation (31b, 32b) peuvent être adaptées sur différents types de valves (51, 52) de pneumatique.

4. Dispositif de remplissage de gaz selon la revendication 2, **caractérisé en ce que** la partie d'adaptation (31b, 32b) de chaque raccord de gonflage au gaz (31, 32) a une partie de réception cylindrique destinée à recevoir une valve (51, 52) de pneumatique.

5. Dispositif de remplissage de gaz selon la revendication 4, **caractérisé en ce que** les parties de réception cylindriques des parties d'adaptation (31b, 32b) d'au moins deux raccords de gonflage au gaz (31, 32) ont des diamètres internes différents ou de profondeurs différentes de telle sorte que les parties de réception cylindriques peuvent être adaptées sur différents types de valves (51, 52) de pneumatique.

6. Dispositif de remplissage de gaz selon la revendication 4, **caractérisé en ce qu'**un élément d'étanchéité (31c, 32c) est situé dans la partie de réception cylindrique de chaque raccord de gonflage au gaz (31, 32), où lorsque la partie d'adaptation (31b, 32b) est adaptée sur une valve (51, 52) de pneumatique, l'élément d'étanchéité (31c, 32c) créé une étanchéité entre la valve (51, 52) de pneumatique et la partie d'adaptation (31b, 32b).
